# EUROPÄISCHE PATENTANMELDUNG

(11) **EP 3 206 157 A1**
(43) Veröffentlichungstag der Anmeldung: **16.08.2017**
(21) Anmeldenummer: 16207350.6
(22) Anmeldetag: 29.12.2016
(51) Int. Cl.: G06K 7/00

(54) **VORRICHTUNG ZUM LAGERN VON GEGENSTÄNDEN**

(30) Priorität: 10.02.2016 DE 202016100672 U
(71) Anmelder: Astra Gesellschaft Für Asset Management MbH&Co. Kg, 30890 Barsinghausen (DE)
(72) Erfinder: Stobbe, Anatoli, 30890 Barsinghausen (DE); Maaß, Norman, 30455 Hannover (DE)
(74) Vertreter: Patentanwälte Thömen & Körner

(57) **Zusammenfassung**

Eine Vorrichtung zum Lagern von Gegenständen, die fernlesbare individuelle RFID-Plättchen tragen, umfasst einen umschlossenen Raum, der mit wenigstens einer verschließbaren Tür verschlossen ist und im Inneren wenigstens eine Leseantenne eines ID-Lesers zum Lesen der RFID-Plättchen aufweist.

Der umschlossene Raum ist gegen den Austritt elektromagnetischer Felder durch elektrisch leitfähige und miteinander elektrisch leitend verbundene Wand- und Türflächen abgeschirmt. In der verschließbaren Tür befindet sich in deren elektrisch leitfähiger Türfläche eine Öffnung mit einem optisch transparenten Fenster. Das Fenster weist eine transparente Folie auf, auf der eine elektrisch leitfähige Schicht oder ein elektrisch leitfähiger Film angeordnet ist.

## Beschreibung

Die Erfindung betrifft eine Vorrichtung zum Lagern von Gegenständen nach dem Oberbegriff des Anspruchs 1.

Eine derartige Vorrichtung ist zum Beispiel aus der EP 2 743 892 A2 bekannt. Sie dient vornehmlich zur Aufbewahrung von wiederverwendbaren Textilien in Krankenhäusern. Die Vorrichtung ist allseitig gegen den Austritt elektromagnetischer Felder abgeschirmt. Dadurch soll sichergestellt werden, dass mittels des ID-Lesers nur Gegenstände mit RFID-Plättchen gelesen werden, die sich im Inneren des umschlossenen Raums befinden und außerhalb des umschlossenen Raums befindliche Gegenstände mit RFID-Plättchen ausgespart bleiben. Die Abschirmung lässt sich am einfachsten dadurch erreichen, dass sämtliche Wände und die Tür aus Metall bestehen. Allerdings ist es dadurch nicht möglich, ohne Öffnen der Tür den Inhalt des umschlossenen Raums zu sichten.

Bekannt sind Mikrowellenöfen, die vollständig abgeschirmt sind, um das elektromagnetische Feld im Inneren zu konzentrieren und Störungen externer Geräte sowie schädliche Einflüsse auf in der Nähe befindliche Personen zu vermeiden. Um die Zubereitung der Speisen beobachten zu können, ist die Tür des Mikrowellenofens mit einem transparenten Fenster versehen. Das transparente Fenster besteht aus zwei Glasscheiben, zwischen denen eine feinmaschig gelochte Metallplatte angeordnet ist. Die Metallplatte dient einerseits als Abschirmung gegen den Austritt des elektromagnetischen Feldes und andererseits zur Ableitung von Wärmeenergie aufgrund von Wärmestrahlung aus dem Inneren und Verlustwärme durch Wirbelströme. Die Metallplatte muss daher eine ausreichende Dicke aufweisen und darf nur eine geringe Maschenweite besitzen, damit durch einen hohen Dämpfungsfaktor ein schädlicher Austritt des energiereichen elektromagnetischen Feldes verringert wird.

Die Metallplatte ist von sich aus intransparent und wird erst durch die feinmaschige Lochung transparent. Durch die geringe Maschenweite wird die Lichtdurchlässigkeit des Fensters aber sehr stark gedämpft, so dass Umgebungslicht zur Beleuchtung des Innenraums des Mikrowellenofens nicht ausreicht, sondern eine interne Lichtquelle erforderlich ist. Allerdings ist nur eine vorübergehende Sicht in das Innere des Mikrowellenofens während des Betriebs nötig, so dass sich die Anschaltzeit dieser Lichtquelle auf die Anschaltzeit des elektromagnetischen Feldes im Inneren beschränken kann.

Bei einer Vorrichtung zum Lagern von Gegenständen ist die von Mikrowellenöfen bekannte Lösung ungeeignet, da der Inhalt des umschlossenen Raums ständig sichtbar sein soll und hierfür Umgebungslicht ausreichen soll.

Der Erfindung liegt die Aufgabe zugrunde, bei einer Vorrichtung zum Lagern von Gegenständen in einem gegen den Austritt elektromagnetischer Felder abgeschirmten umschlossenen Raum den Inhalt des umschlossenen Raums durch ein Fenster in der Tür hindurch ohne Lichtquelle im Inneren sichten zu können.

Diese Aufgabe wird bei einer Vorrichtung nach dem Oberbegriff des Anspruchs 1 durch die Merkmale dieses Anspruchs gelöst.

Weiterbildungen und vorteilhafte Ausgestaltungen ergeben sich aus den Unteransprüchen.

Bei der erfindungsgemäßen Vorrichtung reicht eine sehr geringe Dicke der elektrisch leitfähigen Schicht oder des elektrisch leitfähigen Films aus, um die elektromagnetischen Felder des ID-Lesers abzuschirmen, da nur eine geringe Leistung abgestrahlt wird. Thermische Verluste durch Wirbelströme sind so gering, dass sie nicht durch thermische Leitfähigkeit der elektrisch leitfähigen Schicht oder des elektrisch leitfähigen Films abgeleitet werden müssen. Aufgrund der sehr geringen Dicke der elektrisch leitfähigen Schicht oder des elektrisch leitfähigen Films ist gleichzeitig eine optische Transparenz gegeben. Diese kann so gewählt sein, dass das Umgebungslicht als Beleuchtung für den umschlossenen Raum ausreicht. Die Kopplung der elektrisch leitfähigen Schicht oder des elektrisch leitfähigen Films mit der übrigen elektrisch leitfähigen Türfläche sorgt für eine lückenlose Abschirmung des umschlossenen Raums.

Das Fenster kann ausschließlich aus der transparenten, das heißt durchsichtigen, nicht lichtstreuenden Folie bestehen, wenn diese eine ausreichende mechanische Festigkeit gegen Druck mit Hand eines Benutzers aufweist. Alternativ kann das Fenster auch aus einer transparenten, das heißt durchsichtigen, nicht lichtstreuenden Scheibe aus Glas oder Kunststoff bestehen, auf der die transparente Folie durch Adhäsion oder durch einen Adhäsionskleber befestigt ist.

Vorzugsweise ist die elektrisch leitfähige Schicht oder der elektrisch leitfähige Film mit der übrigen elektrisch leitfähigen Türfläche kapazitiv gekoppelt.

Hierdurch entfällt die Notwendigkeit, eine galvanische Verbindung zwischen der elektrisch leitfähigen Türfläche und dem elektrisch leitfähigen Film oder der elektrisch leitfähigen Folie herzustellen. Da eine Lötverbindung wegen der Beschädigungsgefahr des Trägermaterials des Films oder Folie ausscheidet, käme nur ein mechanischer Kontakt infrage, der aber gegen Schmutz und Korrosion anfällig wäre. Die kapazitive Kopplung bietet für hochfrequente Ströme und Spannungen nur einen minimalen elektrischen Widerstand, so dass gegenüber einer galvanischen Kopplung keine Nachteile vorhanden sind.

Der elektrisch leitfähige Film kann in seinem Randbereich die übrige elektrisch leitfähige Türfläche teilweise überlappen.

Hierdurch entsteht einen besonders feste kapazitive Kopplung.

Bei einer Weiterbildung der Erfindung besteht die elektrisch leitfähige Schicht oder der elektrisch leitfähige Film aus einem elektrisch leitfähigen Gitter aus nicht leitfähigen Maschen und elektrisch leitfähigen Leiterbahnen.

Es besteht so die Möglichkeit, eine optische Transparenz auch dann noch zu erzielen, wenn die Dicke der elektrisch leitfähigen Schicht oder des elektrisch leitfähigen Films so groß bemessen wird, dass nur noch eine geringe oder keine optische Transparenz mehr gegeben ist. Solange die Dicke der elektrisch leitfähigen Schicht oder des elektrisch leitfähigen Films im Verhältnis zur Maschenweite oder Breite der Leiterbahnen sehr gering ist, vorzugsweise kleiner als 1/100 ist, wird der Winkel, unter dem Umgebungslicht durch das transparente Fenster in den umschlossenen Raum einfallen kann, nicht reduziert, so dass der Raum auch ohne interne Lichtquelle durch das Umgebungslicht ausreichend beleuchtet wird, um die darin befindlichen Gegenstände zu sehen.

Vorzugsweise ist das Flächenverhältnis zwischen den Maschen und der Breite der Leiterbahnen des Gitters größer als 1.

Dadurch ist mehr als die Hälfte der Fläche des Fensters lichtdurchlässig und da die Wahrnehmung von Helligkeitsunterschieden nicht linear, sondern logarithmisch ist, wirkt sich die Reduzierung der einfallenden Lichtmenge nur geringfügig auf die Wahrnehmbarkeit aus.

Das Flächenverhältnis zwischen den nicht leitfähigen Maschen und den Leiterbahnen des elektrisch leitfähigen Gitters kann als Funktion der Leitfähigkeit der Leiterbahnen bemessen sein, derart, dass das Flächenverhältnis mit abnehmender Leitfähigkeit der Leiterbahnen abnimmt.

Bei Verwendung eines schlechter leitenden Materials als Kupfer oder einer geringeren Schichtdicke gegenüber einer funktionsfähigen Referenzausführung würde dann bei gleichem Flächenverhältnis eine geringere Dämpfung auftreten. Durch die Berücksichtigung der Leitfähigkeit kann mittels einer Verkleinerung des Flächenverhältnisses wieder die angestrebte Dämpfung erzielt werden.

Die Maschenweite des elektrisch leitfähigen Gitters kann zwischen 1/50. und 1/10 der Wellenlänge des RFID-Trägersignals des ID-Lesers betragen.

Dadurch sind im UHF-Bereich Maschenweiten von mehreren Millimetern möglich, die einen günstigen Kompromiss zwischen Dämpfung und Transparenz ermöglichen.

Das elektrisch leitfähige Gitter besteht vorzugsweise aus einem korrosionsbeständigen Metall oder einer korrosionsbeständigen Legierung. Dadurch wird gewährleistet, dass sowohl die elektromagnetischen Dämpfungseigenschaften als auch die Optik des Fensters trotz Umwelteinflüssen dauerhaft konstant bleiben.

Bei einer praktischen Ausgestaltung besteht die transparente Folie mit dem elektrisch leitfähigen Gitter aus einem ursprünglich vollflächigen, schneidgeplotteten Material.

Dieses Material ist als kostengünstige Dekofolie handelsüblich und kann für Neuentwicklungen und Nachrüstungen auf das gewünschte Dämpfungsmaß bei gegebener Arbeitsfrequenz angepasst werden.

Nachfolgend wird die Erfindung anhand eines Ausführungsbeispiels erläutert, das in der Zeichnung dargestellt ist. Darin zeigen:
- Fig. 1: eine Draufsicht auf einen Teil eines Fensters und
- Fig. 2: einen Schnitt durch die Darstellung nach Fig. 1.

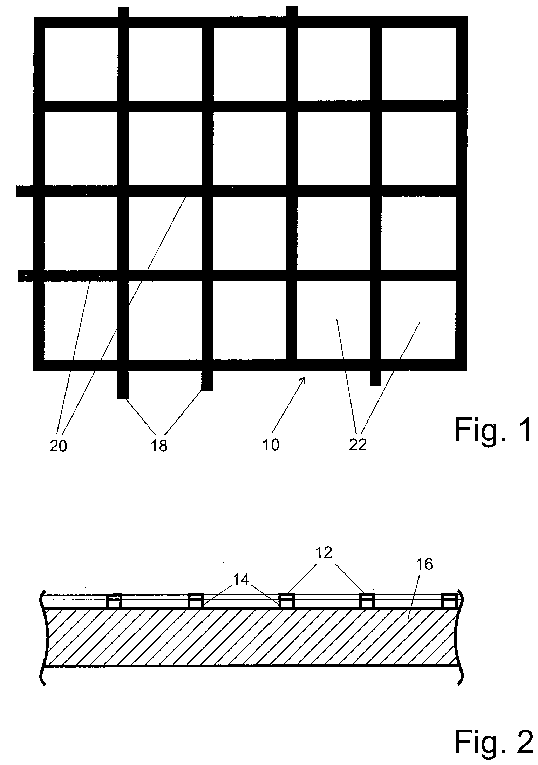

In Fig. 1 ist eine Draufsicht auf einen Teil eines Fensters der erfindungsgemäßen Vorrichtung dargestellt. Sichtbar ist hier ein Gitter 10 aus einem elektrisch leitfähigen korrosionsbeständigen Material, das als Schicht 12oder Film auf einer transparenten Folie 14 angeordnet ist und auf eine Glasscheibe 16 oder Trägerscheibe aus Kunststoff aufgeklebt ist. Das Gitter 10 ist hier in Form von senkrechten und waagerechten Leiterbahnen 18, 20 ausgeführt, die jeweils eine Breite von 4 mm und einen Abstand von 20 mm aufweisen. Auch andere polygone oder gerundete Strukturen sind möglich.

Bei einem Frequenzbereich von etwa 900 MHz im UHF-Bereich beträgt die Maschenweite etwa 1/20 der Wellenlänge. Das Verhältnis der Fläche der Maschen 22 zu den Leiterbahnen 18, 20 des Gitters 10 beträgt etwa 1. Je nach Leitfähigkeit des elektrisch leitfähigen Materials lässt sich eine Dämpfung zwischen 5 und 50 dB erzielen.

Fig. 2 zeigt einen Schnitt durch den Teil des Fensters nach Fig. 1. Die Darstellung zeigt eine Glasscheibe 16, auf die eine Folie 14 mit einer Schicht 12 oder einem Film aus elektrisch leitfähigem Material aufgeklebt ist und das Gitter 10 bildet. Das Gitter 10 ist dabei aus einem ursprünglich vollflächigen, schneidgeplotteten Material hergestellt. An den transparenten Stellen fehlt daher sowohl die Folie als auch die Schicht oder der Film aus elektrisch leitfähigem Material.

## Patentansprüche

1. Vorrichtung zum Lagern von Gegenständen, die fernlesbare individuelle RFID-Plättchen tragen, umfassend einen umschlossenen Raum, der mit wenigstens einer verschließbaren Tür verschlossen ist und im Inneren wenigstens eine Leseantenne eines ID-Lesers zum Lesen der RFID-Plättchen aufweist, wobei der umschlossene Raum gegen den Austritt elektromagnetischer Felder durch elektrisch leitfähige und miteinander elektrisch leitend verbundene Wand- und Türflächen abgeschirmt ist, **dadurch gekennzeichnet, dass** in der verschließbaren Tür in deren elektrisch leitfähiger Türfläche eine Öffnung mit einem optisch transparenten Fenster angeordnet ist und das Fenster eine transparente Folie aufweist, auf der eine elektrisch leitfähige Schicht (12) oder ein elektrisch leitfähiger Film angeordnet ist, der mit der übrigen elektrisch leitfähigen Türfläche gekoppelt ist, wodurch auch die Öffnung in der elektrisch leitfähigen Türfläche gegen den Austritt elektromagnetischer Felder abgeschirmt ist.

2. Vorrichtung nach Anspruch 1, **dadurch gekennzeichnet, dass** die elektrisch leitfähige Schicht (12) oder der elektrisch leitfähige Film mit der übrigen elektrisch leitfähigen Türfläche kapazitiv gekoppelt ist.

3. Vorrichtung nach Anspruch 1 oder 2, **dadurch gekennzeichnet, dass** die elektrisch leitfähige Schicht (12) oder der elektrisch leitfähige Film in seinem Randbereich die übrige elektrisch leitfähige Türfläche teilweise überlappt.

4. Vorrichtung nach einem der Ansprüche 1 bis 3, **dadurch gekennzeichnet, dass** die elektrisch leitfähige Schicht (12) oder der elektrisch leitfähigem Film aus einem elektrisch leitfähigen Gitter (10) besteht.

5. Vorrichtung nach Anspruch 4, **dadurch gekennzeichnet, dass** das Flächenverhältnis zwischen den nicht leitfähigen Maschen (22) und den Leiterbahnen (18, 20) des elektrisch leitfähigen Gitters (10) größer als 1 ist.

6. Vorrichtung nach Anspruch 5, **dadurch gekennzeichnet, dass** das Flächenverhältnis zwischen den nicht leitfähigen Maschen (22) und den Leiterbahnen (18, 20) des elektrisch leitfähigen Gitters (10) als Funktion der Leitfähigkeit der Leiterbahnen (18, 20) bemessen ist, derart, dass das Flächenverhältnis mit abnehmender Leitfähigkeit der Leiterbahnen (18, 20) abnimmt.

7. Vorrichtung nach einem der Ansprüche 4 bis 6, **dadurch gekennzeichnet, dass** die Maschenweite des elektrisch leitfähigem Gitters (10) zwischen 1/50. und 1/10 der Wellenlänge des RFID-Trägers des ID-Lesers beträgt.

8. Vorrichtung nach einem der Ansprüche 4 bis 7, **dadurch gekennzeichnet, dass** die Leiterbahnen (18, 20) des elektrisch leitfähigem Gitters (10) aus einem korrosionsbeständigen Metall oder einer korrosionsbeständigen Legierung besteht.

9. Vorrichtung nach einem der Ansprüche 4 bis 8, **dadurch gekennzeichnet, dass** die transparente Folie (14) mit dem elektrisch leitfähigen Gitter (10) aus einem ursprünglich vollflächigen, schneidgeplotteten Material besteht.
